(19) Europäisches Patentamt
European Patent Office
Office européen des brevets

(11) Veröffentlichungsnummer : **0 326 512 B1**

(12) **EUROPÄISCHE PATENTSCHRIFT**

(45) Veröffentlichungstag der Patentschrift : **21.11.91 Patentblatt 91/47**

(51) Int. Cl.$^5$ : **C08G 18/10,** C08G 18/32, C09J 175/00, C09D 175/00, C09K 3/10, C08L 75/04, // (C08L75/04, 51:04, 55:02)

(21) Anmeldenummer : **89810008.6**

(22) Anmeldetag : **05.01.89**

(54) **Härtbares Gemisch.**

(30) Priorität : **14.01.88 CH 12588/88**

(43) Veröffentlichungstag der Anmeldung : **02.08.89 Patentblatt 89/31**

(45) Bekanntmachung des Hinweises auf die Patenterteilung : **21.11.91 Patentblatt 91/47**

(84) Benannte Vertragsstaaten : **BE CH DE ES FR GB IT LI NL SE**

(56) Entgegenhaltungen : **DE-A- 3 140 884**

(73) Patentinhaber : **CIBA-GEIGY AG**
**Klybeckstrasse 141**
**CH-4002 Basel (CH)**

(72) Erfinder : **Mülhaupt, Rolf, Dr.**
**Chemin de la Prairie 2**
**CH-1723 Marly (CH)**
Erfinder : **Simon, Hubert, Dr.**
**Rue A. Böhringer 42**
**F-68100 Mulhouse (FR)**
Erfinder : **Cotting, Jacques-Alain, Dr.**
**Alfons-Aebi-Strasse 19C**
**CH-3186 Düdingen (CH)**

EP 0 326 512 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein härtbares Gemisch, enthaltend ein cycloaliphatisches Polyol und eine mit einem aliphatischen oder cycloaliphatischen Diisocyanat verkappte präpolymere Polyhydroxylverbindungen.

In der DE-OS 3140884 werden härtbare Polyurethanzusammensetzungen offenbart, die aus einem mit einem Isocyanat verkappten Präpolymer, einem aliphatischen Polyol und einem metallorganischen oder Metallsalz-Katalysator bestehen.

Auch die in EP-A-0124753 offenbarte härtbare Polyurethanzusammensetzung enthält für die Aushärtung spezifische Härtungskatalysatoren.

Es wurde nun gefunden, dass man bei Verwendung von bestimmten cycloaliphatischen Polyolen als Härtungsmittel für mit aliphatischen oder cycloaliphatischen Diisocyanaten verkappte Präpolymere auf den Einsatz eines Härtungsbeschleunigers oder Härtungskatalysators verzichten kann. Die aus den erfindungsgemässen, härtbaren Gemischen hergestellten Verklebungen zeichnen sich zudem durch besonders gute Zugscherfestigkeit aus.

Gegenstand der vorliegenden Erfindung ist somit ein härtbares Gemisch enthaltend

(a) ein cycloaliphatisches Polyol der Formel I

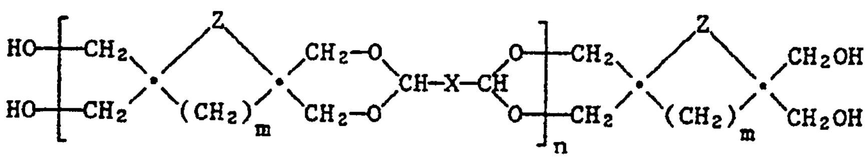 (I),

worin Z für

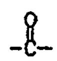 oder 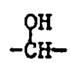

steht, m eine Zahl von 2 bis 5 bedeutet, n Null oder eine Zahl von 1 bis 10 bedeutet und X für eine direkte Bindung oder einen aliphatischen oder cycloaliphatischen Rest steht, und

(b) eine mit einem aliphatischen oder cycloaliphatischen Diisocyanat verkappte präpolymere Polyhydroxylverbindung mit einer durchschnittlichen Isocyanatfunktionalität von mindestens 2.

Im härtbaren Gemisch beträgt das Aequivalentverhältnis von primären und gegebenenfalls sekundären OH-Gruppen zu Isocyanatgruppen im allgemeinen von 0,9 bis 1,1, das heisst, die Komponenten (a) und (b) liegen in etwa stöchiometrischen Mengen vor.

In der Formel I bedeutet Z vorzugsweise den Rest

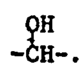.

Ferner steht m vorzugsweise für die Zahl 2 oder 3 und bedeutet n in der Formel I vorzugsweise Null oder eine Zahl von 0,1 bis 3.

Der Rest X in Formel I, der sich von einem Dialdehyd oder einem Diketon ableitet, ist vorzugsweise eine direkte Bindung oder ein bis zu 20 C-Atome enthaltender aliphatischer oder cycloaliphatischer Rest. Insbesondere bedeutet X eine direkte Bindung oder einen aliphatischen Rest mit bis zu 12 C-Atomen.

Geeignete Verbindung der Formel I, worin n für Null steht, sind beispeilsweise 2,2,6,6-Tetramethylolcyclohexanol-1, 2,2,6,6-Tetramethylolcyclohexanon-1, 2,2,5,5-Tetramethylolcyclopentanol-1 oder 2,2,5,5-Tetramethylolcyclopentanon-1.

Verbindungen der Formel I, worin n für die Zahl 1 oder eine Zahl grösser als 1 steht, sind bekannt und können in bekannter Weise nach dem beispielsweise im US-Patent 4,374,953 offenbarten Verfahren hergestellt werden, indem man ein Polyol der Formel II

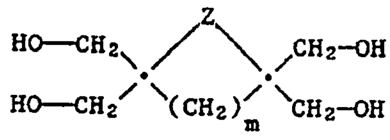

(II),

worin Z und m die gleiche Bedeutung wie in Formel I haben, mit einem aliphatischen oder cycloaliphatischen Dialdehyd oder einem aliphatischen oder cycloaliphatischen Diketon zu einem hydroxylgruppenhaltigen Polycycloacetal oder Polycycloketal der Formel I polykondensiert.

Geeignete Polyole der Formel II sind beispielsweise die zuvorgenannten Polyole der Formel I, worin n für Null steht. Für das Verfahren geeignete Dialdehyde oder Diketone sind beispielsweise Glyoxal, Glutaraldehyd, Succinaldehyd und 1,4-Cyclohexandion.

Die Polykondensation des Polyols der Formel II mit dem Dialdehyd oder Diketon zum hydroxylgruppenhaltigen Polycycloacetal der Formel I erfolgt vorzugsweise in einem inerten organischen Lösungsmittel, wie z.B. Toluol, mit einem sauren Katalysator, wie z.B. in Anwesenheit von $H_3PO_2$, und unter gleichzeitiger Entfernung von Wasser aus dem Reaktionsgemisch.

In den erfindungsgemässen härtbaren Gemischen verwendet man als cycloaliphatische Polyole der Formel I ferner vorzugsweise solche, welche eine Erweichungstemperatur von 60 bis 180°C, vorzugsweise zwischen 80 bis 140°C aufweisen.

Die im erfindungsgemässen härtbaren Gemisch als Komponente (b) verwendeten, mit bestimmten Diisocyanaten verkappten, präpolymeren Polyhydroxylverbindungen weisen eine durchschnittliche Isocyanatfunktionalität von mindestens 2, vorzugsweise von 2 bis 3, auf, und werden in bekannter Weise durch Addition eines aliphatischen oder cycloaliphatischen Diisocyanats an eine präpolymere Polyhydroxylverbindung erhalten, wobei auf 1 Hydroxyläquivalent der Polyhydroxylverbindung 1 Mol des Diisocyanats eingesetzt wird.

Geeignete aliphatische bzw. cycloaliphatische Diisocyanate sind beispielsweise Hexamethylen-1,6-diisocyanat, 2,6-Diisocyanatohexansäuremethylester, 1-Methyl-2,4-diisocyanatohexan, 2,2,4-Trimethyl-1,6-diisocyanatohexan, 1-Isocyanato-3,5,5-trimethyl-5-isocyanatomethylcyclohexan (Isophorondiisocyanat), 1-Methyl-2,4-diisocyanatocyclohexan, 4,4-Diisocyanatodicyclohexylmethan und 4,4'-Diisocyanato-3,3-dimethyl-diphenyl.

Vorzugsweise verwendet man zur Verkappung der präpolymeren Polyhydroxylverbindungen cycloaliphatische Diisocyanate, insbesondere Isophorondiisocyanat.

Unter präpolymerer Polyhydroxylverbindung versteht man im Zusammenhang mit dem vorliegenden Erfindungsgegenstand Präpolymere, die mindestens zwei wiederkehrende Strukturelemente im Molekül aufweisen und durch Hydroxylgruppen terminiert sind. Dabei kann das Präpolymer linear oder schwach verzweigt sein. Bevorzugt ist die präpolymere Polyhydroxylverbindung linear und weist sie bevorzugt ein mittleres Molekulargewicht (Zahlenmittel) von 150 bis 10000, insbesondere von 500 bis 3000, auf.

Präpolymere Polyhydroxylverbindungen sind bekannt und können Kondensations- oder Additionspolymere sein. Beispiele für solche Verbindungen sind hydroxylterminierte Polyether, Polyester, Polycaprolactone, Polyurethane und Polybutadiene. Diese hydroxylterminierten Präpolymere werden bevorzugt zur Herstellung der Komponente (b) eingesetzt. Insbesondere verwendet man hydroxylterminiertes Polycaprolacton zur Herstellung einer mit einem Diisocyanat verkappten präpolymeren Polyhydroxylverbindung.

Beispiele für hydroxylterminierte Polyether als präpolymere Polyhydroxylverbindungen sind Polyalkylenetherpolyole, die durch anionische Polymerisation, Copolymerisation oder Blockcopolymerisation von Alkylenoxiden, wie Ethylenoxid, Propylenoxid oder Butylenoxid, mit di- oder polyfunktionellen Alkoholen, wie 1,4-Butandiol, 1,1,1-Trimethylolethan, 1,1,1-Trimethylolpropan, 1,2,6-Hexantriol, Glycerin, Pentaerythrit oder Sorbit, oder mit Aminen, wie Methylamin, Ethylendiamin oder 1,6-Hexylendiamin, als Starterkomponenten oder durch kationische Polymerisation oder Copolymerisation cyclischer Ether, wie Tetrahydrofuran, Ethylenoxid oder Propylenoxid mit sauren Katalysatoren, wie $BF_3 \cdot$ Etherat, oder durch Polykondensation von unter Wasserabspaltung polykondensierbaren Glykolen, wie 1,6-Hexandiol, in Gegenwart saurer Veretherungskatalysatoren, wie p-Toluolsulfonsäure, erhalten werden. Ferner kann man auch Oxalkylierungsprodukte von Phosphorsäure oder phosphoriger Säure mit Ethylenoxid, Propylenoxid, Butylenoxid oder Styroloxid verwenden.

Beispiele für hydroxylterminierte Polyester als präpolymere Polyhydroxylverbindungen sind Polyester, die sich durch Polykondensation von Di- oder Polycarbonsäuren, wie beispielsweise Adipinsäure, Sebazinsäure, Azelainsäure, Dimer- und Trimerfettsäuren, Phthalsäure, Isophthalsäure, Terephthalsäure, Tetrahydrophthalsäure, Hexahydrophthalsäure und Endomethylentetrahydrophthalsäure, mit Di-oder Polyolen, wie beispielsweise Ethylenglykol, 1,4-Butandiol, 1,6-Hexandiol, Di-, Tri- und Tetraethylenglykol, Di-, Tri- und Tetrapropylenglykol, Di-, Tri und Tetrabutylenglykol, 2,2-Dimethylpropan-1,3-diol, 1,1,1-Trimethylolpropan,

1,1,1-Trimethylolethan und 1,2,6-Hexantriol erhalten lassen.

Die zuvor genannten hydroxylterminierten Polyether und Polyester stellen bekannte Verbindungen dar (vgl. zum Beispiel die DE-OS 2152606 oder "Kunststoff-Handbuch", Hanser-Verlag, 1983, Seite 16).

Als präpolymere Polyhydroxylverbindungen sind weiterhin auch die hydroxylterminierten Polycaprolactone geeignet, wie sie durch ringöffnende Polymerisation von beispielsweise ε-Caprolacton oder Methyl-ε-caprolacton mit Titankatalysatoren in Gegenwart eines Diols oder Triols, vorzugsweise Diols, als Starter erhalten werden. Solche hydroxylterminierten Polycaprolactone sind bekannt (vgl. Kunstoff-Handbuch, Hanser-Verlag, Band 7, 1983, Seite 17 und 56) und zum Teil im Handel erhältlich, beispielsweise von der Firma UCC als "Niax® 310".

Hydroxylterminierte Polyurethane und Verfahren zu deren Herstellung sind ebenfalls bekannt, zum Beispiel aus dem "Kunstoff-Handbuch", Hanser-Verlag, 1983, Seiten 19 und 20. Solche Verbindungen werden beispielsweise erhalten, indem man n Mole eines Diisocyanats mit n + 1 Mole eines Diols gegebenenfalls in Gegenwart eines Katalysators unter Polyaddition umsetzt. Zur Herstellung der Hydroxylgruppen aufweisenden Polyurethane als präpolymere Polyhydroxylverbindungen können dabei sowohl aliphatische und cycloaliphatische als auch aromatische Diisocyanate verwendet werden, wie beispielsweise 2,4-Diisocyanatotoluol sowie dessen technische Gemische mit 2,6-Diisocyanatotoluol, 2,6-Diisocyanatotoluol, 1,5-Diisocyanatonaphthalin, 4,4'-Diisocyanatodiphenylmethan sowie technische Gemische verschiedener Diisocyanatodiphenylmethane, wie der 4,4'-und 2,4-Isomeren, urethanisiertes 4,4'-Diisocyanatodiphenylmethan, carbodiimidisiertes 4,4'-Diisocyanatodiphenylmethan, das Uretdion des 2,4-Diisocyanatotoluols, Triisocyanatotriphenylmethan, das Addukt aus Diisocyanatotoluol und Trimethylolpropan, das Trimerisat aus Diisocyanatotoluol, Diisocyanato-m-xylol und N,N'-Di-(4-methyl-3-isocyanatophenyl)-harnstoff.

Ebenfalls bekannt und zum Teil im Handel erhältlich sind die hydroxylgruppenhaltigen Polybutadiene, welche als präpolymere Polyhydroxylverbindungen zur Herstellung der Komponente (b) verwendet weden können.

Die Herstellung der erfindungsgemässen Gemische kann in an sich bekannter Weise durch Vermengen oder durch Vermischen in einem inerten organischen Lösungsmittel, wie beispielsweise Dichlormethan, Dimethylformamid oder Methylethylketon, vorgenommen werden und erfolgt vorzugsweise durch Vermengen, indem man das cycloaliphatische Polyol der Formel I (Komponente a) in der mit einem Diisocyanat verkappten präpolymeren Polyhydroxylverbindung (Komponente b) dispergiert.

Es wurde ferner gefunden, dass man ein die Komponente (a) und (b) enthaltendes erfindungsgemässes Gemisch bei vergleichsweise gleicher Härtungstemperatur, beispielsweise zwischen 120 bis 160°C, schneller aushärten kann, wenn man dem erfindungsgemässen Gemisch zusätzlich als Komponente (c) ein Polybutadienpfropfcopolymer zugibt. Die aus solchen Gemischen hergestellten Beschichtungen oder Verklebungen weisen vergleichsweise gleich gute Eigenschaften auf.

Gegenstand vorliegender Erfindung ist somit auch ein härtbares Gemisch, enthaltend neben den Komponenten (a) und (b) zusätzlich als Komponente (c) ein Polybutadienpfropfcopolymer.

Die Komponente (c) kann im erfindungsgemässen Gemisch bis zu 30 Gew.-%, bezogen auf die Gesamtmenge der Komponenten (a) und (b), enthalten sein, Vorzugsweise beträgt im erfindungsgemässen Gemisch der Anteil der Komponente (c) 5 bis 15 Gew.-%.

Als Polybutadienpfropfcopolymere (c) sind Copolymere auf Basis von Butadien und von mindestens einem polaren, ethylenisch ungesättigten Comonomeren zu verstehen.

Beispiele für polare ethylenisch ungesättigte Comonomere sind Acrylsäure, Methacrylsäure, Ester der Acryl- oder Methacrylsäure, beispielsweise die Methyl- oder Ethylester, Amide der Acryl- oder Methacrylsäure, Fumarsäure, Itaconsäure, Maleinsäure oder deren Ester oder Halbester, beispielsweise die Mono- oder Dimethylester, oder Maleinsäure- oder Itaconsäureanhydrid ; Vinylester, beispielsweise Vinylacetat, polare Styrole, wie kernchlorierte oder kernbromierte Styrole, oder insbesondere Acrylnitril oder Methacrylnitril.

Neben polaren ethylenisch ungesättigten Comonomeren kann die Komponente (c) noch weitere unpolare ethylenisch ungesättigte Comonomere enthalten. Beispiele dafür sind Ethylen, Propylen oder insbesondere Styrol oder substituierte Styrole, wie Vinyltoluol.

Die Komponente (c) kann fest, insbesondere pulverförmig, oder bevorzugt flüssig sein. Ferner kann es sich dabei um Thermoplasten, thermoplastische Elastomere oder Elastomere handeln.

Bevorzugte Verbindungen für die Komponente (c) Pfropfcopolymere auf Basis von Butadien-Acrylnitril, Butadien-Acrylnitril-Styrol Copolymere (ABS), insbesondere ABS-Pulver, und Methylmethacrylat-Styrol-Butadien-Pfropfcopolymere (MBS).

Die Härtung der erfindungsgemässen Gemische erfolgt bei höheren Temperaturen. Im allgemeinen wendet man Härtungstemperaturen zwischen 80 bis 180°C, vorzugsweise zwischen 100 und 140°C, an. Gewünschtenfalls kann die Härtung der erfindungsgemässen Gemische auch in Gegenwart von in der Polyurethanchemie üblichen Härtungskatalysatoren vorgenommen werden. Als Beispiele für solche Katalysatoren seien genannt: Diazabicyclooctan, Dibutylzinndilaurat oder Zinn-II-octoat. Diese Katalysatoren werden in den üblichen Mengen eingesetzt, beispielsweise in Mengen von 0,001-2 Gew.-%, bezogen auf die Menge an Di- oder Polyisocyanat.

Ferner können die erfindungsgemässen Gemische vor der Härtung mit den üblichen Zusätzen versehen werden. Als übliche Zusätze können sie Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Haftvermittler, Antioxidantien und Lichtschutzmittel enthalten.

Die erfindungsgemässen Gemische lassen sich beispielsweise als Klebstoffe, Klebefilme, Matrixharze, Lacke oder Dichtungsmassen oder ganz allgemein zur Herstellung von gehärteten Produkten verwenden. Sie können in jeweils dem speziellen Anwendungsgebiet angepasster Formulierung, in ungefülltem, oder gefülltem Zustand, z.B. als Anstrichmittel, Beschichtungsmassen, Lacke, Pressmassen, Tauchharze, Giessharze, Imprägnierharze, Laminierharze, Matrixharze und Klebemittel verwendet werden.

Vorzugsweise verwendet man die erfindungsgemässen Gemische zur Herstellung von Verklebungen, Abdichtungen oder Beschichtungen. Gegenstand der Erfindung sind auch die durch Härtung der erfindungsgemässen Gemische erhaltenen Formstoffe, insbesondere Verklebungen, Abdichtungen oder Beschichtungen.

Herstellung der Ausgangssubstanzen

A. Cycloaliphatisches Polyol A

Durch Polykondensation von 100 g (0,453 Mol) 2,2,6,6-Tetramethylolcyclohexanol-1 mit 41,26 g (0,411 Mol) Glutardialdehyd bei 85°C unter 650 mbar ensteht ein hydroxylgruppenhaltiges Polycycloacetal (cycloaliphatisches Polyol A) mit einer Erweichungstemperatur von 78°C und einem OH-Aequivalentgehalt von 10,64 Val/kg. Die Verbindung entspricht folgender Formel

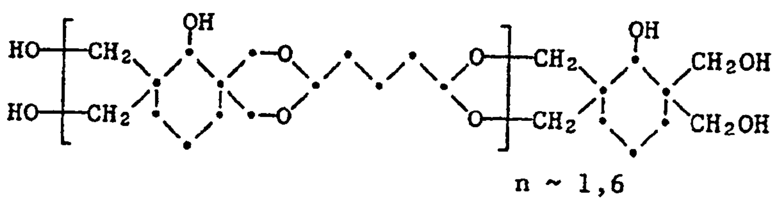

B. Cycloaliphatisches Polyol B

Durch Polykondensation von 220,3 g (1 Mol) 2,2,6,6-Tetramethylolcyclohexanol-1 mit 29,02 g (0,5 Mol) Glyoxal bei 68°C unter 350 mbar entsteht ein Polycycloacetal (cycloaliphatisches Polyol B) mit einer Erweichungstemperatur von 87°C und einem OH-Aequivalentgehalt von 17,9 Val/kg. Die erhaltene Verbindung entspricht folgender Formel

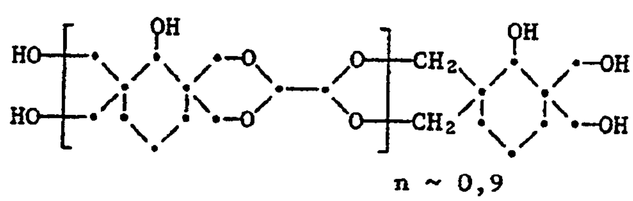

I. Mit Isophorondiisocyanat verkapptes Polycaprolactontriol (nachfolgend als Präpolymer I bezeichnet)

Unter Stickstoff rührt man 103 g Isophorondiisocyanat und 116 g Niax® 310 (hydroxylterminiertes Polycaprolactontriol mit einer OH-Zahl von 187 ; Handelsprodukt der Fa. UCC) bei 100°C bis das entstandene Präpolymer einen Isocyanatgehalt von 10,3 Gew.-% erreicht hat.

Beispiel 1 :

Man mischt 20 g Präpolymer I mit 3,27 g 2,2,6,6-Tetramethylolcyclohexanol-1 und 1 g Aerosil® 380 (pyrogene Kieselsäure ; Handelsprodukt der Fa. Degussa). Auf einer Heizplatte bestimmt man von dieser Mischung die Gelierzeiten (' = Minuten, " = Sekunden) bei verschiedenen Temperaturen.

| | Gelierzeit |
|---|---|
| 120°C | 22'36" |
| 140°C | 11'53" |
| 160°C | 5'29" |

Es werden die Zugscherfestigkeiten nach DIN 53283 an Verklebungen gleicher Substrate gemessen, wobei die Verklebungen unter gleichen Bedingungen während 2 Stunden bei 140°C gehärtet wurden.

| | Zugscherfestigkeit [N/mm²] |
|---|---|
| entfettetes, sandgestrahltes Aluminium | 18,6 |
| entfetteter Stahl | 18,4 |
| glasverstärkter Polyester | 17,9 |

Beispiel 2 :

Man mischt 20 g Präpolymer I mit 3,27 g 2,2,6,6-Tetramethylolcyclohexanol-1, 2,3 g Novodur® A90 (ABS-Pulver ; Handelsprodukt der Fa. BAYER) und 1 g Aerosil® 380 und bestimmt die Gelierzeiten wie in Beispiel 1.

| | Gelierzeit |
|---|---|
| 120°C | 18'16" |
| 140°C | 5'35" |
| 160°C | 3'55" |

Es werden wie in Beispiel 1 Verklebungen hergestellt und deren Zugscherfestigkeit gemäss DIN 53283 bestimmt.

| | Zugscherfestigkeit [N/mm²] |
|---|---|
| entfettetes, sandgestrahltes Aluminium | 19,3 |
| entfetteter Stahl | 19,1 |
| glasverstärkter Polyester | 17,9 |

Beispiel 3 :

Es werden 20 g Präpolymer I mit 2,28 g 2,2,5,5-Tetramethylolcyclopentanon-1 und 1 g Aerosil® 380 gemischt und die Gelierzeiten dieser Mischungen bestimmt.

| | Gelierzeit |
|---|---|
| 140°C | 1h37' |
| 160°C | 37'05" |

Wie in Beispiel 1 werden Verklebungen hergestellt und deren Zugscherfestigkeit gemäss DIN 53283 bestimmt.

| | Zugscherfestigkeit [N/mm²] |
|---|---|
| entfettetes, sandgestrahltes Aluminium | 11,1 |
| entfetteter Stahl | 11,3 |

Beispiel 4 :

Es werden Mischungen aus den unten angegebenen Substanzen hergestellt, deren Gelierzeiten bestimmt und wie in Beispiel 1 zum Verkleben von entfettetem, sandgestrahltem Aluminium und von entfettetem Stahl eingesetzt.

| | Mischung 4a | Mischung 4b |
|---|---|---|
| Cycloaliphatisches Polyol A | 8,23 g | 4,6 g |
| Präpolymer I | 20,0 g | 20,0 g |
| Aerosil® 380 | 1,0 g | 1,0 g |

| | Gelierzeiten | |
|---|---|---|
| 140°C | 20' | 35' |
| 160°C | 7'47" | 12'10" |

| | Zugscherfestigkeiten [N/mm²] | |
|---|---|---|
| Aluminium | 19,4 | 12,0 |
| Stahl | 22,3 | 11,5 |

Beispiel 5 :

Es werden 20 g Präpolymer I mit 4,7 g des cycloaliphatischen Polyols B und 1 g Aerosil® 380 gemischt, die Gelierzeiten dieser Mischung bestimmt und wie in Beispiel 1 zum Verkleben von entfettetem, sandgestrahltem Aluminium und entfettetem Stahl verwendet.

| | Gelierzeiten |
|---|---|
| 140°C | 1h 7'43" |
| 160°C | 25' |

| | Zugscherfestigkeiten [N/mm²] |
|---|---|
| Aluminium | 6,4 |
| Stahl | 9,1 |

## Patentansprüche

1. Härtbares Gemisch, enthaltend
(a) ein cycloaliphatisches Polyol der Formel I

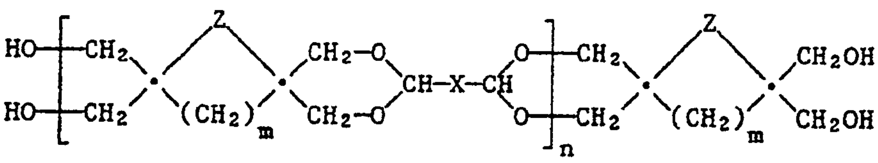 (I),

worin Z für

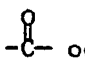 oder 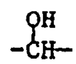

steht, m eine Zahl von 2 bis 5 bedeutet, n Null oder eine Zahl von 1 bis 10 bedeutet und X für eine direkte Bindung oder einen aliphatischen oder cycloaliphatischen Rest steht, und
(b) eine mit einem aliphatischen oder cycloaliphatischen Diisocyanat verkappte präpolymere Polyhydroxylverbindung mit einer durchschnittlichen Isocyanatfunktionalität von mindestens 2.

2. Gemisch gemäss Anspruch 1, worin Z in Formel I für

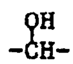

steht.

3. Gemisch gemäss Anspruch 1, worin in Formel I m für 2 oder 3 und n für Null oder eine Zahl von 0,1 bis 3 stehen.

4. Gemisch gemäss Anspruch 1, worin das cycloaliphatische Polyol der Formel I eine Erweichungstemperatur von 60 bis 180°C, vorzugsweise von 80 bis 140°C, aufweist.

5. Gemisch gemäss Anspruch 1, worin die Komponente (b) eine mit einem cycloaliphatischen Diisocyanat verkappte präpolymere Polyhydroxylverbindung darstellt.

6. Gemisch gemäss Anspruch 1, worin die mit einem aliphatischen oder cycloaliphatischen Diisocyanat verkappte präpolymere Polyhydroxylverbindung sich von einem hydroxylterminierten Polyether, Polyester, Polycaprolacton, Polyurethan oder Polybutadien ableitet.

7. Gemisch gemäss Anspruch 6, worin sich die mit einem aliphatischen oder cycloaliphatischen Diisocyanat verkappte präpolymere Polyhydroxylverbindung von einem hydroxylterminierten Polycaprolacton ableitet.

8. Gemisch gemäss Anspruch 1, enthaltend zu den Komponenten (a) und (b) zusätzlich als Komponente (c) ein Polybutadienpfropfcopolymer.

9. Gemisch gemäss Anspruch 8, enthaltend als Komponente (c) ein Acrylnitril-Butadien-Styrol-Pfropfcopolymer.

10. Verwendung eines Gemisches gemäss Anspruch 1 zur Herstellung von Verklebungen, Abdichtungen oder Beschichtungen.

11. Verfahren zur Herstellung von Verklebungen, Abdichtungen oder Beschichtungen, dadurch gekennzeichnet, dass man ein Gemisch gemäss Anspruch 1 als Verklebungen, Abdichtungen oder Beschichtungen im Temperaturbereich von 80 bis 180°C, vorzugsweise 100 bis 140°C, aushärtet.

12. Die nach dem Verfahren gemäss Anspruch 11 durch Härtung erhaltenen Verklebungen, Abdichtungen oder Beschichtungen.

## Revendications

1. Mélange durcissable qui contient :
(a) un polyol cycloaliphatique répondant à la formule I :

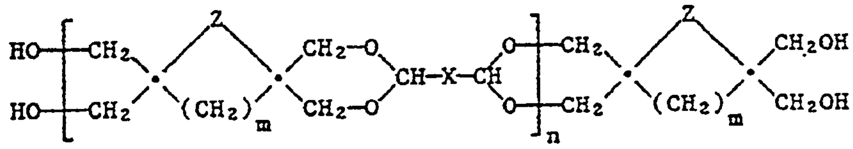 (I),

dans laquelle Z représente

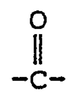 ou 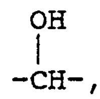,

m désigne un nombre de 2 à 5, n désigne un nombre de 0 à 10 et X représente une liaison directe ou un radical aliphatique ou cycloaliphatique, et

(b) un composé polyhydroxylique prépolymère qui est masqué par un di-isocyanate aliphatique ou cycloaliphatique et qui a une fonctionnalité isocyanate moyenne d'au moins 2.

2. Mélange selon la revendication 1 dans lequel Z représente

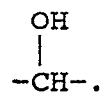.

3. Mélange selon la revendication 1 caractérisé en ce que, dans la formule I, m est égal à 2 ou à 3 et n est égal à zéro ou représente un nombre de 0,1 à 3.

4. Mélange selon la revendication 1 dans lequel le polyol cycloaliphatique de formule I a une température de ramollissement de 60 à 180°C, de préférence de 80 à 140°C.

5. Mélange selon la revendication 1 dans lequel la composante (b) est un composé polyhydroxylique prépolymère masqué par un di-isocyanate cycloaliphatique.

6. Mélange selon la revendication 1 dans lequel le composé polyhydroxylique prépolymère masqué par un diisocyanate aliphatique ou cycloaliphatique dérive d'un polyéther, d'un polyester, d'une polycaprolactone, d'un polyuréthanne ou d'un polybutadiène, à radicaux hydroxy terminaux.

7. Mélange selon la revendication 6 dans lequel le composé polyhydroxylique prépolymère masqué par un diisocyanate aliphatique ou cycloaliphatique dérive d'une polycaprolactone à hydroxy terminaux.

8. Mélange selon la revendication 1 qui contient, en plus des composantes (a) et (b), un copolymère greffé de polybutadiène comme composante (c).

9. Mélange selon la revendication 8 qui contient, comme composante (c), un copolymère greffé acrylonitrile/butadiène/styrène.

10. Application d'un mélange selon la revendication 1 à la confection de collages, d'étanchéifications ou de revêtements.

11. Procédé pour confectionner des collages, des étanchéifications ou des revêtements, caractérisé en ce qu'on durcit un mélange selon la revendication 1, comme collages, étanchéifications ou revêtements, dans l'intervalle de température allant de 80 à 180°C, de préférence de 100 à 140°C.

12. Collages, étanchéifications ou revêtements qui ont été obtenus par durcissement selon le procédé de la revendication 11.

## Claims

1. A curable mixture, comprising

(a) a cycloaliphatic polyol of the formula I

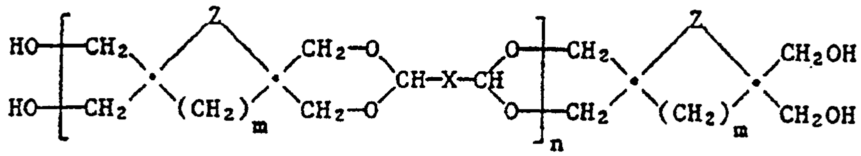 (I),

in which Z is

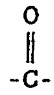 or 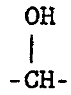,

m is a number from 2 to 5, n is zero or a number from 1 to 10 and X is a direct bond or an aliphatic or cycloaliphatic radical, and

(b) a prepolymeric polyhydroxy compound blocked by an aliphatic or cycloaliphatic diisocyanate and having an average isocyanate functionality of at least 2.

2. A mixture according to claim 1, in which Z in formula I is

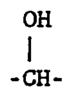.

3. A mixture according to claim 1, in which, in formula I, m is 2 or 3 and n is zero or a number from 0.1 to 3.

4. A mixture according to claim 1, in which the cycloaliphatic polyol of the formula I has a softening point from 60 to 180°C, preferably from 80 to 140°C.

5. A mixture according to claim 1, in which the component (b) is a prepolymeric polyhydroxy composed blocked by a cycloaliphatic diisocyanate.

6. A mixture according to claim 1, in which the prepolymeric polyhydroxy compound blocked by an aliphatic or cycloaliphatic diisocyanate is derived from a hydroxy-terminated polyether, polyester, polycaprolactone, polyurethane or polybutadiene.

7. A mixture according to claim 6, in which the prepolymeric polyhydroxy compound blocked by an aliphatic or cycloaliphatic diisocyanate is derived from a hydroxy-terminated polycaprolactone.

8. A mixture according to claim 1, containing a polybutadiene graft copolymer as component (c) in addition to components (a) and (b).

9. A mixture according to claim 8, containing an acrylonitrile/ butadiene/styrene graft copolymer as component (c).

10. The use of a mixture according to claim 1 for producing adhesive bonds, seals or coatings.

11. A process for producing adhesive bonds, seals or coatings, which comprises curing a mixture according to claim 1 as an adhesive bond, a seal or coating in the temperature range from 80 to 180°C, preferably 100 to 140°C.

12. An adhesive bond, seal or coating obtained by curing by the process according to claim 11.